# EUROPEAN PATENT APPLICATION

(11) **EP 1 481 928 A1**
(43) Date of publication of application: **01.12.2004**
(21) Application number: 03011153.8
(22) Date of filing: 26.05.2003
(51) Int. Cl.: B65G 63/00

(54) **Assembled-type automatic container loading/unloading system**

(71) Applicant: Amity Investment Pte Ltd, Singapore 638931 (SG)
(72) Inventor: Cheng I Hung, Taishan Hsiang, Taipei Hsien (TW)
(74) Representative: Banzer, Hans-Jörg, Dipl.-Ing.

(57) **Abstract**

An assembled-type automatic container loading and unloading system comprises a central structure body (100) having a plurality of vertical stakes and a plurality of parallel frames (221), including upper parallel frames and lower parallel frames, extending across and connected to the vertical stakes. A transportation mechanism (226) is provided near each of both sides of the lower parallel frames and extends along the direction perpendicular to the parallel frames. A loading/unloading mechanism, located between the upper parallel frames and the lower parallel frames, extends between the adjacent parallel frames at each of both ends. At least a land structure body (200) has a plurality of vertical frames, a plurality of transverse frames (202), and a plurality of longitudinal frames (205), provided at an upper side of the land structure body and including an upper longitudinal frame layer and a lower longitudinal frame layer. All kinds of frames are perpendicularly connected to each other. The land structure body has a first side, at which a transverse transportation mechanism parallel to the transverse frames is provided, and a second side, opposite to the first side, at which a loading and unloading area for land transportation is provided. A whole-area bridge crane extends between the adjacent upper longitudinal frames of the upper layer. A local gantry crane extends between the adjacent lower longitudinal frames of the lower layer. All of the frames are made of steel.

## Description

### Field of the Invention

The present invention relates generally to a container loading and unloading system and more particularly, to an assembled-type automatic container loading and unloading system.

### Background of the Invention

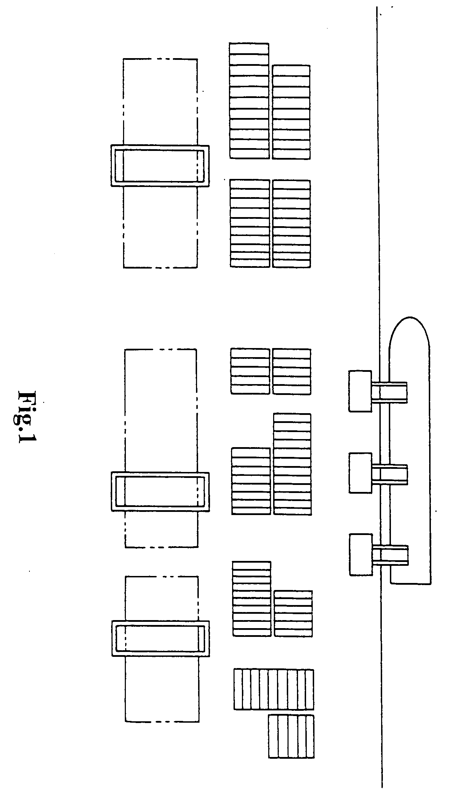

Fig. 1 is a top plan view of a current container center at a commercial port and illustrates the container center closely abutting the commercial port. The container center lasts for hundreds of meters in size and is paved with reinforced concrete. Furthermore, in order to meet the draft of a large container ship, the port must be filled up, which however greatly increases the cost of the hardware of the port.

The aforementioned current container center has the following deficiencies. First, as illustrated in Fig. 1, a number of containers are placed in different direction in different areas of the container center. Then, by traveling among the areas of an overhead crane, the containers are rearranged, loading, unloading, and transported. In another aspect, the container center must be left large vacant space to be convenient for a truck to travel in the container center, which lows down the efficiency of the use of the land.

Besides, the containers are transported to the particular positions in the container center by the trucks one by one and unloaded by an overhead crane. Then, they are further transported to the host on the seashore at appointed time by the trucks or the driverless carts. Finally the containers are carried onto a container ship. The above container loading process spends so much human efforts and time that the operating cost of container importation, exportation, and transportation is very high.

In view of enhancing the efficiency of container- handling at the container center, the container docks all over the world try to induce a computer system so as to assist in handling the container, which includes conducting the operators on the bridge hoist, the gate gantry and the overhead crane through an ultra frequency channel set in a control center to handle the containers and dispense the cargoes therein in time, managing the entering of the truck into the container yard by means of a computer card-reading system to identify and trace the activities of the trucks in the dock, the planning of the ship position, the planning of the sites in the container yard, and the exchanging of electronic data...etc. However, the above measures, which are still far away from the object of overall automation, can only assist in the current mode transportation through human efforts.

In consideration of the cost about trans-ocean shipping, the larger container ship for pelagic transportation of the container is more economic so that it is desirable to collect the smaller quantity of containers from different place to a transfer center so as to further transport to another place. The efficiency of container loading and unloading has become an important factor about ability of competition of a container wharf. Due to the above reasons, the current container loading and unloading system suffers an obstacle in overcoming cost down.

### Summary of the Invention

Accordingly, the present invention is directed to an assembled-type automatic loading and unloading system that can substantially obviate one or more of the problems due to the limitations and disadvantages of the related arts by means of using computer control apparatus for automatically loading and unloading the containers.

One object of the present invention is the provision of an assembled-type automatic loading and unloading system which can largely upgrade the container loading and unloading efficiency.

Another object of the present invention is the provision of an assembled-type automatic loading and unloading system of which cost in construction is much lower than that of the current container wharf.

Another object of the present invention is the provision of an assembled-type automatic loading and unloading system which land used is far less than that of the current container wharf.

Another object of the present invention is the provision of an assembled-type automatic loading and unloading system which size is changeable according to the number of the containers handled.

Additional features and advantages of the invention will be set forth in the description which follows, and in part will be apparent from the description, or may be learned by practice of the invention. The objectives and advantages of the invention will be realized and attained by the structure particularly pointed out in the written description and claims hereof as well as the appended drawings.

According to the present invention, these objects are achieved by an assembled-type automatic container loading and unloading system as defined in claim 1. The dependent claims define preferred and advantageous embodiments of the invention. To achieve these and other advantages and according to the purpose of the present invention, as embodied and broadly described, an assembled-type automatic container loading and unloading system comprises a central structure body having a plurality of vertical stakes and a plurality of parallel frames, including upper parallel frames and lower parallel frames, extending across and connected to the vertical stakes. A transportation mechanism is provided near each of both sides of the lower parallel frames and extends along the direction perpendicular to the parallel frames. A loading/unloading mechanism, located between the upper parallel frames and the lower parallel frames, extends between the adjacent parallel frames at each of both ends. At least a land structure body has a plurality of vertical frames, a plurality of transverse frames, and a plurality of longitudinal frames, provided at an upper side of the land structure body and including an upper longitudinal frame layer and a lower longitudinal frame layer. All kinds of frames are perpendicularly connected to each other. The land structure body has a first side, at which a transverse transportation mechanism parallel to the transverse frames is provided, and a second side, opposite to the first side, at which a loading and unloading area for land transportation is provided. A whole-area bridge crane extends between the adjacent upper longitudinal frames of the upper layer. A local gantry crane extends between the adjacent lower longitudinal frames of the lower layer. All of the frames are made of steel.

It is preferred that an assembled-type automatic container loading and unloading system further comprises a platform, traveling up and down, extending between the adjacent vertical frames for temporally setting the container.

It is preferred that the number of the structure units lined in transverse direction of an assembled-type automatic container loading and unloading system is defined as that of the row structure bodies, the number of the structure units lined in the longitudinal direction is defined as that of the column structure bodies, and the number of the transverse tracks equals to that of the row structure units.

It is preferred that the local gantry and the whole-area bridge crane of an assembled-type automatic container loading and unloading system are controlled by a computer system.

It is to be understood that both the forging general description and the following detailed description are exemplary and explanatory and are intended to provide further explanation of the invention as claimed.

### Brief Description of the Drawings

The accompanying drawings, which are included to provide a further understanding of the invention and are incorporated in and constitute a part of the specification, illustrate embodiments of the invention and together with the description serve to explain the principle of the invention. In the drawings:
Fig. 1 is a plan view illustrating a current container wharf;
Fig. 2 is a top plan view illustrating the assembled-type automatic loading and unloading system of the present invention;
Fig. 3 is a perspective view illustrating the land structure body according to the assembled-type automatic loading and unloading system of the present invention;
Fig. 4 is a side view illustrating the assembled-type automatic loading and unloading system of the present invention; and
Fig. 5 is a sectional view of the assembled-type automatic loading and unloading system of the present invention taken along the section □-□ of the Fig. 2.

### Detailed Description of the Invention

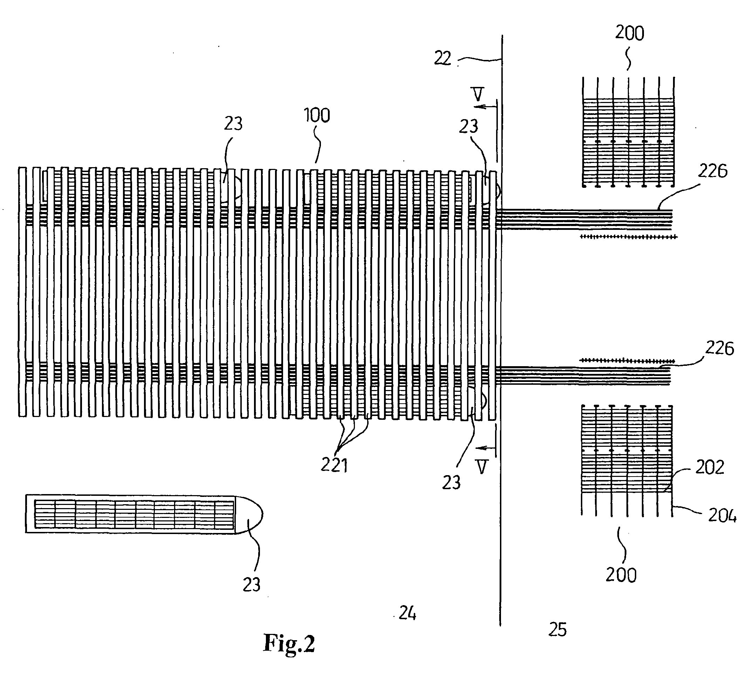

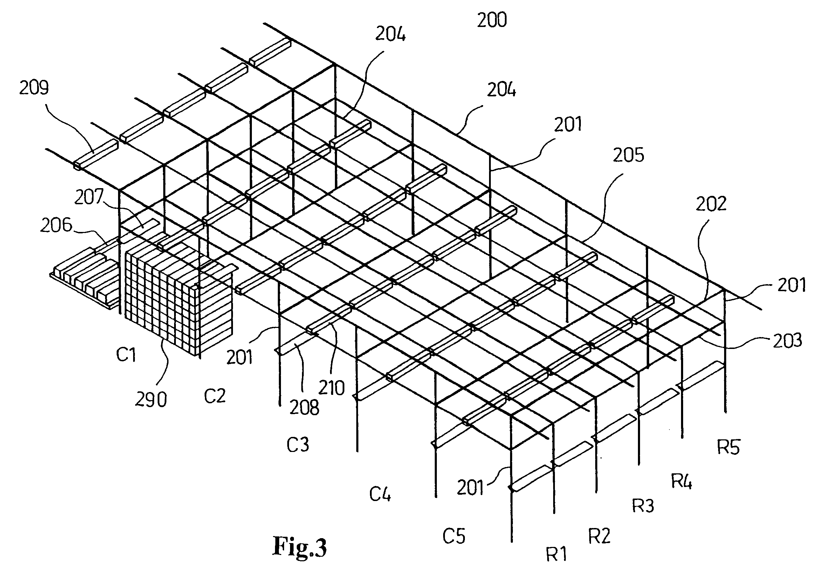

Referring now to Figs. 2 and 3, the assembled-type automatic loading and unloading system of the present invention includes a central structure body 100 and at least a land structure body 200. The central structure body 100, having a plurality of transverse conveyors 226 for carrying the containers 290 from the land 25 onto the container ship 23 or from the container ship 23 to the land 25, extends from the land 25, over the seashore, to the sea 24.

The land structure body 200 is perpendicularly installed by the side of the transportation mechanisms, such as conveyors 226, so that the containers 290 can be directly transported from the central structure body 100 to the land structure body 200 by means of the conveyors 226 and vice versa. The central structure body 100 comprises a plurality of upper parallel frames 221, arranged in parallel each other, which are long enough to allow each of both ends thereof extending over a container ship 23 and are distant 25 meters from the top of the container ship 23.

The land structure body 200 includes a plurality of vertical frames 201, a plurality of transverse frames 202, 203, and a plurality of longitudinal frames 204, 205. All frames are perpendicularly connected to each other to form a land structure body 200. A plurality of transverse tracks 207 are provided at the side adjacent to the conveyors 226 of the land structure body 200. Each transverse track 207 is provided with a cart 207 thereon. The opposite side of the land structure body 200 is the terminal for the trucks.

The land structure body 200 includes a plurality of cubic structure units, each of which is defined by the transverse frames 203, longitudinal frames 205, and four adjacent vertical frames 201 arranged in matrix. The structure units lined in the longitudinal direction are the column sub-structure bodies C1, C2, C3, C4, C5 and lined in the transverse direction are the row sub-structure bodies R1, R2, R3, R4, R5. The transverse frames 202, 203 and the longitudinal frames 204, 205 are all provided at the upper side of the land structure body 200. The longitudinal frames 204, 205 are arranged in two layers including the upper layer having the upper longitudinal frames 204 and the lower layer having the lower longitudinal frames 205.

Between adjacent vertical frames 201 in the same column, there is extended a platform 208 which can vertically travel between the lower longitudinal frame 205 and the particular position over the ground for temporarily placing the containers during the operation of the container rearrangement and transportation. Each row sub-structure bodies R1, R2, R3, R4, R5 is provided with a whole-area bridge crane 209 which extends between adjacent upper longitudinal frames 204 and can travel between the conveyor 226 side and the truck terminal side to perform the container input and output operation of the present automatic loading and unloading system. Each structure unit is provided with a local gantry crane 210 which extends between adjacent lower longitudinal frames 205 and can only travel in the structure unit to perform the rearrangement of the containers.

The number of the conveyors 226 corresponds to that of the transverse tracks 206 in the land structure body 200 and the number of the transverse tracks 206 corresponds to that of the row sub-structure body R, that is, if there are five row sub-structure bodies R1, R2, R3, R4, R5, then there are five conveyors 226. The conveyors 226 can integrate the operation of container input and output in all the row sub-structure bodies R1, R2, R3, R4, R5 to coordinate with that of the loading/unloading mechanism, such as the hoist 220.

In this embodiment, the capacity of each structure unit is 80 containers which are arranged in 8 layers with 10 containers in each layer. There is a gap about 10~ 20 cm between adjacent containers for inserting a vertical spacer to increase the stability and convenience during container stacking.

According to the standard of the container specification, the safe stacking number is 9 containers; however, in consideration of probably further placing one container on the top of the container stack during rearrangement, the allowable maximum is 8 layers in the automatic system of the present invention. The number, generally set at 10, of the containers accommodated in each layer depends on that handled and scheduled at each port. As illustrated in Fig. 3, when the containers placed on the second layer in the structure unit of the column sub-structure body C1 must be drawn out, the local gantry crane 210 provided on the structure unit at first shifts the containers placed on the third to the eighth layers stacking on the second layer to another container stack and forms the ninth layer thereof, then hangs up the container set on the second layer and put that on the platform 208, and then proceeds next rearrangement process.

While the container desired to be drawn out is put on the platform, the whole-area bridge crane 209 hangs up it and takes it to the cart 207 or to the truck terminal side.

A hoist 220, located between the upper parallel frames 221 and the lower parallel frames 224 of the central structure body 100, is installed between the adjacent parallel frames 221, 224 at each of both ends. In case that the operation speed of the hoist 220 is 3 minutes per container and the system of the present invention has five row sub-structure bodies R1~R5, the operation including the rearrangement and transportation must be finished during 15 minutes in order to achieve the optimal container loading efficiency. In other word, if each longitudinal transportation and rearrangement can be finished during 15 minutes, five containers can be output from five row sub-structure bodies R to the conveyors 226 during 15 minutes, which matches the operation speed, 3 minutes per container, of the hoist 220.

The width and height of each structure unit depend on the number of the layers and that of the containers in each layer. For example, one structure unit needs 32 meters in width and 30 meters in height if it is arranged in 8 layers with 10 containers, each of which is 2.5 meters in size, with a gap between adjacent contains, and with platforms therein.

Fig. 3 illustrates that the depth, e.g. the distance between adjacent longitudinal frames 204, of the structure unit which accommodates the standard container, 12 m in size, is about 12.5m, slightly larger than 12 m.

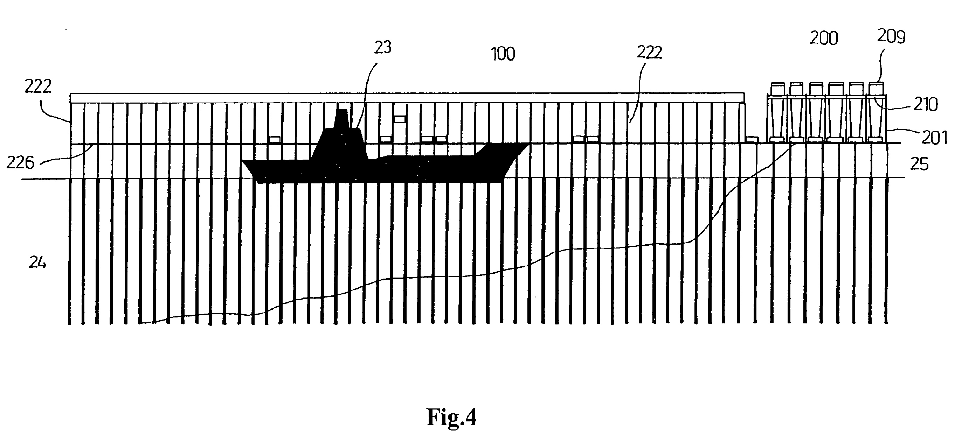

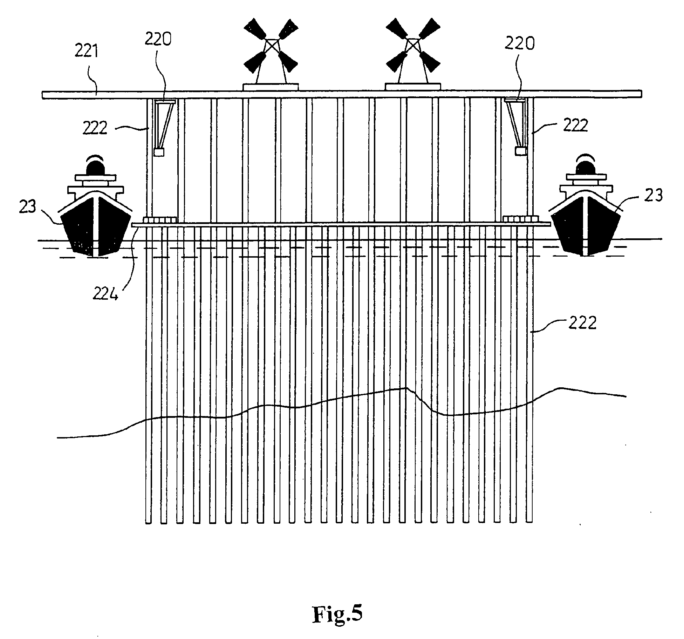

As illustrated in Figs. 4 and 5, the frames and the vertical stakes 222 can be connected in different way such as soldering or riveting. The vertical stakes 222 are such deeply and vertically inserted into the ground that are fixed in the laccolith. Because there is not any concrete work in the whole land structure body 200, it can be modified in size according to the containers quantity handled at the port or the idle frames can be transported to and be utilized at another port.

According to the automatic container loading and unloading system of the present invention, upon the container is carried to the temporal site, the computer records the related data including the entrance time, the serial number of structure unit, the row number, the layer number, the site number. Therefore, when a particular container is desired, the computer immediately indicates its site and controls the cranes to carry it out of the automatic container loading and unloading system of the present invention. The above-described operation significantly promotes the input/output speed and precision of the container.

All kinds of operations, including the transportation by the whole-area bridge crane, the local gantry crane going back to its original place, the container rearrangement by the local gantry crane, the optimal container arrangement... etc, of the present invention can be controlled by the computer to attend complete automation. In comparison with the current container wharf, the automatic container loading and unloading system, without any operator entering into the area where the containers are temporally placed, of the present invention not only decreases the labor needed so as to upgrade the efficiency of the container transportation but significantly improves the safety in the container port.

This invention has been disclosed in terms of specific embodiments. It will be apparent that many modifications can be made to the disclosed structures without departing from the invention. Therefore, it is the intent of the appended claims to cover all such variations and modifications as come within the true sprit and scope of this invention.

## Claims

1. An assembled-type automatic container loading and unloading system, comprising:
a central structure body (100) having a plurality of vertical stakes (222) and a plurality of parallel frames, including upper parallel frames (221) and lower parallel frames, extending across and connected to the vertical stakes;
a transportation mechanism (226) provided near each of both sides of the lower parallel frames and extending along the direction perpendicular to the parallel frames;
a loading/unloading mechanism, located between the upper parallel frames (221) and the lower parallel frames, extending between the adjacent parallel frames at each of both ends;
at least a land structure body (200) having a plurality of vertical frames (201), a plurality of transverse frames (202, 203), and a plurality of longitudinal frames (204, 205), provided at an upper side of the land structure body (200) and including an upper longitudinal frame layer and a lower longitudinal frame layer, all kinds of frames being perpendicularly connected to each other, and the land structure body (200) having a first side, at which a transverse transportation mechanism (207) parallel to the transverse frames (202, 203) is provided, and a second side, opposite to the first side, at which a loading and unloading area for land transportation is provided;
a whole-area bridge crane (209) extending between the adjacent upper longitudinal frames (204) of the upper layer and traveling between the first side and the second side;
a structure unit (C1-C5; R1-R5) defined by four adjacent vertical frames (201) ;and
a local gantry crane (210) extending between the adjacent lower longitudinal frames (205) of the lower layer in each of the structure units (C1-C5; R1-R5) and longitudinally traveling in the structure units (C1-C5; R1-R5).

2. An assembled-type automatic container loading and unloading system as claimed in claim 1, further comprising a platform (208), traveling up and down, extending between the adjacent vertical frames (201) for temporally setting the container (209).

3. An assembled-type automatic container loading and unloading system as claimed in claim 1 or claim 2, wherein the number of the structure units lined in transverse direction is defined as that of row structure units (R1-R5), the number of the structure units lined in the longitudinal direction is defined as that of column structure units (C1-C5), and the number of transverse tracks (207) equals to that of the row structure units (R1-R5).

4. An assembled-type automatic container loading and unloading system as claimed in any one of claims 1-3, wherein the local gantry crane (210) and the whole-area bridge crane (209) are controlled by a computer system.
